# EUROPÄISCHE PATENTSCHRIFT

(11) **EP 0 556 373 B1**
(45) Veröffentlichungstag und Bekanntmachung des Hinweises auf die Patenterteilung: **28.12.1994**
(21) Anmeldenummer: 92918912.4
(22) Anmeldetag: 04.09.1992
(51) Int. Cl.: G01G 11/08

(54) **DOSIERVORRICHTUNG**
DOSING DEVICE
DISPOSITIF DE DOSAGE

(30) Priorität: 06.09.1991 DE 4129726
(43) Veröffentlichungstag der Anmeldung: 25.08.1993
(73) Patentinhaber: Pfister GmbH, 86165 Augsburg (DE)
(72) Erfinder: HÄFNER, Hans, Wilhelm, D-8890 Aichach-Walchshofen (DE)
(74) Vertreter: Fiener, Josef
(86) Internationale Anmeldenummer: EP9202053
(87) Internationale Veröffentlichungsnummer: WO9305372

(56) Entgegenhaltungen:
- EP-A- 0 344 393
- WO-A-92/03707
- DE-C- 760 098
- FR-A- 2 526 541
- GB-A- 2 127 566

## Beschreibung

Die Erfindung betrifft eine Dosiervorrichtung zum kontinuierlichen gravimetrischen Dosieren von schüttfähigem Gut gemäß dem Oberbegriff des Anspruches 1.

Eine derartige Dosiervorrichtung ist aus der DE 32 17 406 C2 der Anmelderin bekannt. Hierbei weist der Rotor eine Vielzahl von Aufnahmetaschen auf, die durch Zuführen von Druckluft entleert werden. Diese Dosiervorrichtung eignet sich insbesondere für die Kohlenstaubdosierung in Brennprozessen. Die dort vorgeschlagene Dosiervorrichtung ist jedoch wegen des zusätzlichen pneumatischen Fördersystems zum Zuführen von Druckluft und durch die für die freie Schwenkbewegung des Rotors erforderlichen elastischen Anschlußglieder relativ bauaufwendig. Zudem kann es bei Schüttgut mit hoher Feuchte oder bei klebrigem Schüttgut zu Brückenbildungen in den Taschen des Zellenrotors kommen, was unter ungünstigen Bedingungen zu einer unzureichenden Austragung des Schüttgutes führen kann.

Demzufolge liegt der Erfindung die Aufgabe zugrunde, eine besonders einfache und kompakte Dosiervorrichtung der gattungsgemäßen Art zu schaffen, die auch für schlecht fließendes Schüttgut geeignet ist.

Diese Aufgabe wird erfindungsgemäß gelöst mit einer Dosiervorrichtung mit den Merkmalen des Anspruches 1.

Durch die Ausbildung des Rotors als scheibenförmiger, glattflächiger Meßteller läßt sich dieser bedeutend einfacher herstellen, beispielsweise durch Drehbearbeitung, so daß die Herstellungskosten bedeutend geringer sind als bei dem Stand der Technik, bei dem der Zellenrotor als Gußteil oder als aufwendiges Schweißteil konstruiert ist. Durch den im Abgabebereich des Meßtellers vorgesehenen Abstreifer, der den halben Durchmesser des Meßtellers übergreift, wird eine rasche, kontinuierliche Abgabe des Schüttgutes erreicht, ohne daß aufwendige Druckleitungen erforderlich sind. Hierbei wird auch leicht klebendes Schüttgut vollständig von dem Meßteller abgestreift, so daß sich nach dem Abgabebereich keine Restmengen des Schüttgutes auf dem Meßteller befinden und somit Meßungenauigkeiten hervorrufen könnten.

Bevorzugte Weiterbildungen der erfindungsgemäßen Dosiervorrichtung sind in den Unteransprüchen gekennzeichnet.

Ausführungsbeispiele der erfindungsgemäßen Dosiervorrichtung werden nachstehend anhand der Zeichnungen näher erläutert. Es zeigen:
- Fig. 1: eine Seitenansicht auf die erfindungsgemäße Dosiervorrichtung; und
- Fig. 2: eine Draufsicht auf die Dosiervorrichtung gemäß Fig. 1.

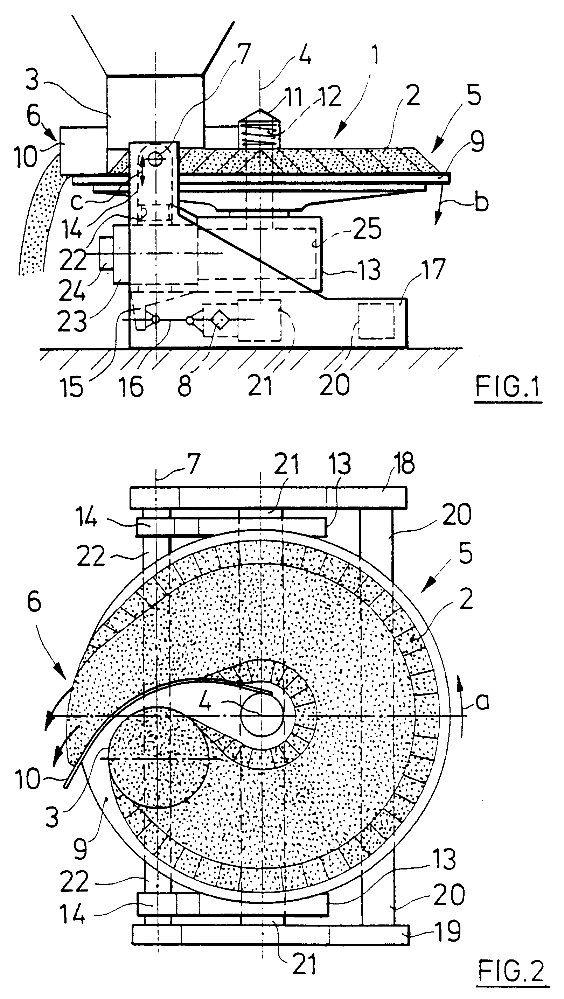

In Fig. 1 ist eine Dosiervorrichtung 1 in Seitenansicht gezeigt, mit der punktiert dargestelltes schüttfähiges Gut 2 dosiert wird, wobei die Gewichtsbelastung der Dosiervorrichtung kontinuierlich erfaßt wird, wie dies weiter unten beschrieben wird. Das Schüttgut 2 gelangt über einen Aufgabeschacht 3 auf einen Rotor 5, der um eine vertikale Drehachse 4 in Drehrichtung a (vgl. Fig. 2) angetrieben ist. Bei der Aufgabe des Schüttgutes 2 durch den Aufgabeschacht 3 bildet sich der in Fig. 2 punktiert dargestellte Schüttgutstrang 2 aus, der nach einer Drehbewegung auf dem Rotor 5 über nahezu 360° den Rotor 5 in einem Abgabebereich 6 verläßt.

Der Rotor 5 ist, wie an sich bekannt, über eine im wesentlichen horizontale Schwenkachse 7 geringfügig verschwenkbar gelagert, wie dies durch den Pfeil b angedeutet ist. Unter der Rotorbelastung durch das Schüttgut 2 schwenkt der Rotor 5 somit geringfügig nach unten um die Schwenkachse 7 und beaufschlagt hierbei eine von der Schwenkachse 7 beabstandet angeordnete Kraftmeßvorrichtung 8. Die Kraftmeßvorrichtung 8 ist bevorzugt als weglos arbeitende Kraftmeßzelle ausgebildet, so daß die Schwenkbewegungen gemäß dem Pfeil b minimal sind.

Erfindungsgemäß ist hier der Rotor 5 als scheibenförmiger, glattflächiger Meßteller 9 ausgebildet, der in horizontaler Umlaufebene um die vertikale Drehachse 4 angetrieben ist. Auf diesen Meßteller 9 wird das Schüttgut durch den Aufgabeschacht 3 aufgehäuft, so daß sich bei der Umlaufbewegung ein Strang von Schüttgut 2 ausbildet, wie dies in Fig. 2 punktiert dargestellt ist. Der Schüttgutstrang 2 weist dabei an seinen inneren und äußeren Umfangsflächen kegelartige Abschrägungen auf, während die Oberseite des Schüttgutkegels durch die Unterkante des Aufgabeschachtes 3 glattgezogen wird. Zur weiteren Vergleichmäßigung kann auch ein Abziehlineal oder dergleichen vorgesehen sein. Nach der Umlaufbewegung des Schüttgutstranges 2 um nahezu den Vollkreis gelangt das Schüttgut 2 an einen Abstreifer 10, der hier etwa evolventenförmig gekrümmt ist. Mit dem Abstreifer 10 wird das Schüttgut 2 im Abgabebereich 6 von dem Meßteller 9 abgestreift und einer weiterfördernden oder weiterverarbeitenden Einrichtung zugeführt. Der Abstreifer 10 ist hier mit seinem inneren Ende an einer Kappe 11 befestigt, die stationär auf der Drehachse 4 mittels eines strichliert dargestellten stationären Innenzapfens 12 befestigt ist. Der Abstreifer 10 kann dabei durch eine im Innern der Kappe 11 angedeuteten Feder federnd an der Oberfläche des Meßtellers 9 aufliegen. Es können jedoch auch an der Unterkante des Abstreifers 10 federnde Elemente vorgesehen sein, so daß die Unterkante des Abstreifers an der Oberseite des Meßtellers 9 anliegt und somit ein sicheres Abstreifen des Schüttgutes 2 gewährleistet. Anstatt der zentralen Befestigung des Abstreifers 10 könnte der Abstreifer 10 auch an seiner Außenseite durch einen Umgriff um den Meßteller 9 an einem Schwenkrahmen 13 befestigt sein. Wie insbesondere aus Fig. 2 ersichtlich ist, ist der Abstreifer 10 in unmittelbarer Nähe neben dem Aufgabeschacht 3 angeordnet, so daß sich auf dem Meßteller 9 zur kontinuierlichen Bewegung des Schüttgutes eine möglichst lange Meßstrecke ergibt.

Der Meßteller 9 ist drehbar an dem oben erwähnten Schwenkrahmen 13 gelagert, der wiederum um die Schwenkachse 7 gemäß dem Pfeil b geringfügig verschwenkbar ist. Der Schwenkrahmen 13 weist einen nach oben gerichteten Arm 14 zur Lagerung an der Schwenkachse 7 auf, sowie einen nach unten gerichteten Hebelarm 15, der über einen Zuganker 16 mit der Kraftmeßvorrichtung 8 verbunden ist. Dieser Schwenkrahmen 13 ist in einen Sockel 17 eingesetzt, der im wesentlichen aus zwei L-förmigen Seitenwangen 18 und 19, sowie hier zwei Quertraversen 20 und 21 gebildet ist. Am oberen Ende des Sockels 17 ist die Schwenkachse 7 in etwa auf der Umlaufebene des Meßtellers 9 vorgesehen, so daß bei Belastung der Meßteller 9 und der diesen abstützende Schwenkrahmen 13 innerhalb des Sockels 17 unter Beaufschlagung der Kraftmeßvorrichtung 8 geringfügig verschwenkbar ist. Die Quertraversen 20 und 21 des Sockels 17 dienen der steifen Ausbildung des Sockels 17. In entsprechender Weise ist für den darin eingepaßten Schwenkrahmen 13 auch wenigstens ein Querträger 22 für den Schwenkrahmen 13, beispielsweise zwischen den beiden vertikalen Armen 14 vorgesehen. Ebenso könnte ein entsprechender Querträger 22 im Bereich des Hebelarmes 15 oder auch in Nähe der Drehachse 4 vorgesehen sein. Durch diese Ausbildung des Schwenkarmes 13 und die entsprechende Ausführung des Sockels 17 ergibt sich eine verwindungsfreie Lagerung für die beweglichen Teile. Zugleich ist diese Abstützung für den Rotor 5 bzw. den Meßteller 9 relativ einfach herzustellen und weist einen kompakten Aufbau auf. So kann beispielsweise der Sockel 17 in einfacher Weise auf dem Hallenboden direkt unter einem Bunker und dessen Aufgabeschacht 3 aufgestellt werden, so daß die gesamte Dosiervorrichtung 1 leicht transportabel und auf andere Bunker oder Silos umsetzbar ist.

Wie aus Fig. 1 ersichtlich ist, ist unterhalb des Querträgers 22 ein Motor 23 mit einem Tachogenerator 24 vorgesehen. An den Motor 23 ist ein Getriebe 25 angeflanscht, das zum Antrieb des Meßtellers 9 dient. Das Getriebe 25 ist hier zwischen die seitlichen Rahmen des Schwenkrahmens 13 eingepaßt. Bei entsprechender Ausbildung des Motors 23 kann jedoch das Getriebe 25 auch entfallen, so daß der Motor 23 direkt unterhalb des Meßtellers 9 angeflanscht sein kann. Mit dem drehzahlregelbaren Antriebsmotor 23 und dem Tachogenerator 24 zur Überwachung der Drehzahl des Meßtellers 9 wird, wie auch von anderen kontinuierlich gravimetrischen Dosiervorrichtungen bekannt, das Schüttgut nach einem Soll/Ist-Vergleich durch eine an sich bekannte Regeleinrichtung geregelt. Dabei werden die über elektrische Meßsignale ermittelten Werte von Momentlast des Schüttgutes und der Drehzahl zur Ermittlung der Förderstromdichte multipliziert und das Ergebnis mit einem Sollwert verglichen. Zur Konstanthaltung der Förderstromdichte wird bei Auftreten einer Soll/Ist-Differenz die Drehzahl des Antriebsmotors 23 so geregelt, daß das Produkt aus Drehzahl und Momentlast konstant bleibt. Hierzu ist eine nicht näher dargestellte, hinlänglich bekannte Auswerteeinrichtung vorgesehen, der einerseits mit der Kraftmeßvorrichtung 8 und andererseits mit dem Tachogenerator 24 über Signalleitungen verbunden ist.

Die Momentlast des Schüttgutes 2 wird dabei von der Kraftmeßvorrichtung 8 als auf die Meßstrecke des Meßtellers 9 wirksame Last des Schüttgutes 2 erfaßt, dessen Masse den Meßteller 9 zusammen mit dem Schwenkrahmen 13 um die Schwenkachse 7 nach unten schwenken will und hierbei die Kraftmeßvorrichtung 8 beaufschlagt.

Es sei darauf hingewiesen, daß sich die vorgeschlagene Dosiervorrichtung zur unmittelbaren regelbaren Dosierung eines schüttfähigen Gutes im Zusammenwirken mit einem oberhalb angeordneten Bunker eignet, ohne daß es zur regelbaren Einstellung einer vorgegebenen Förderstromdichte eines volumetrisch dosierenden Zuteilgerätes bedarf, wie dies beispielsweise bei Dosierbandwaagen häufig erforderlich ist. Somit bildet die vorgeschlagene Dosiervorrichtung eine besonders einfach herzustellende und kompakte Einrichtung mit hoher Dosiergenauigkeit und hoher Betriebssicherheit.

Zur Anpassung an unterschiedliche Aufschütthöhen des Schüttgutstranges 2 kann auch die Höhe der Schwenkachse 7, z. B. mit Schnellsteckverschlüssen oder Exzenterbuchsen gemäß dem Pfeil c verstellt werden.

Es sei darauf hingewiesen, daß der Schwenkrahmen 13 zusammen mit dem daran gelagerten Meßteller 9 anstatt an dem Sockel 17 auch an einem Portal oder einem Gerüst schwenkbar angelenkt sein kann. Von Bedeutung ist hierbei, daß die Schwenkachse 7 nicht nur etwa mittig durch den Aufgabeschacht 3 verläuft, sondern auch etwa mittig durch die Längserstreckung des Abstreifers 10. Durch diese Anordnung des Abstreifers 10 wird erreicht, daß sich durch den Abstreifvorgang des Schüttgutes keine Störmomente auf die Meßanordnung ergeben. Wie aus Fig. 2 ersichtlich, schneidet die Schwenkachse 7 den Abstreifer 10 etwa in dessen Mitte. Hierbei entspricht die Schüttgutmenge, die sich hier rechts der Schwenkachse 7 am inneren Ende des Abstreifers 10 in Nähe der Achse 4 aufstaut, etwa der Schüttgutmenge, die sich links von der Schwenkachse 7 am äußeren Ende des Abstreifers 10 aufstaut. Somit herrscht in diesem Bereich in etwa Gleichgewicht und die Störeinflüsse durch sich ggf. beim Abstreifen aufstauendes Schüttgut werden minimiert. Entsprechendes gilt für die Anordnung des Aufgabeschachtes 3, so daß ggf. plötzlich herabfallende Schüttgutklumpen die Masseerfassung auf dem Meßteller 9 nicht ungünstig beeinflussen.

## Patentansprüche

1. Dosiervorrichtung zum kontinuierlichen gravimetrischen Dosieren von schüttfähigem Gut, das über einen Aufgabeschacht (3) zu einem um eine vertikale Drehachse (4) angetriebenen Rotor leitbar und über einen zum Aufgabeschacht in Drehrichtung versetzten Abgabebereich entnehmbar ist, wobei der Rotor schwenkbar um eine im wesentlichen horizontale Schwenkachse (7) gelagert ist und mit einer entfernt von dieser Schwenkachse angeordneten Kraftmeßvorrichtung (8) verbunden ist,
dadurch gekennzeichnet, daß
der Rotor (5) als scheibenförmiger, glattflächiger Meßteller (9) ausgebildet ist und im Abgabebereich (6) ein den Radius des Meßtellers (9) übergreifender Abstreifer (10) angeordnet ist.

2. Dosiervorrichtung nach Anspruch 1, dadurch gekennzeichnet, daß der Abstreifer (10) bogenförmig gekrümmt ausgebildet ist.

3. Dosiervorrichtung nach Anspruch 1 oder 2, dadurch gekennzeichnet, daß der Abstreifer (10) auf dem Meßteller (9) federnd anliegt.

4. Dosiervorrichtung nach einem der Ansprüche 1 bis 3, dadurch gekennzeichnet, daß der Abstreifer (10) an einer drehfest angeordneten Kappe (11) auf der Drehachse (4) des Meßtellers (9) befestigt ist.

5. Dosiervorrichtung nach einem der Ansprüche 1 bis 4, dadurch gekennzeichnet, daß die Schwenkachse (7) mittig durch den Aufgabeschacht (3) und/oder den Abstreifer (10) verläuft.

6. Dosiervorrichtung nach einem der Ansprüche 1 bis 5, dadurch gekennzeichnet, daß die Schwenkachse (7) höhenverstellbar ist.

7. Dosiervorrichtung nach einem der Ansprüche 1 bis 6, dadurch gekennzeichnet, daß der Meßteller (9) an einem Schwenkrahmen (13) gelagert ist, der einerseits mit einem Arm (14) an der Schwenkachse (7) gelagert ist und andererseits mit einem Hebelarm (15) zur Ankoppelung an die Kraftmeßvorrichtung (8) versehen ist.

8. Dosiervorrichtung nach Anspruch 7, dadurch gekennzeichnet, daß der Hebelarm (15) vertikal nach unten gerichtet ist und über einen Zuganker (16) mit der Kraftmeßvorrichtung (8) verbunden ist.

9. Dosiervorrichtung nach einem der Ansprüche 1 bis 8, dadurch gekennzeichnet, daß die Schwenkachse (7) am oberen Ende eines Sockels (17) ausgebildet ist, der durch L-förmige Seitenwangen (18, 19) mit Quertraversen (20, 21) gebildet ist.

10. Dosiervorrichtung nach Anspruch 9, dadurch gekennzeichnet, daß die Kraftmeßvorrichtung (8) an einer Quertraverse (21) des Sockels (17) befestigt ist.

11. Dosiervorrichtung nach einem der vorhergehenden Ansprüche, gekennzeichnet durch einen drehzahlregelbaren Antriebsmotor (23) für den Meßteller (9) und einen Tachogenerator (24) zur Überwachung der Drehzahl des Meßtellers (9).

12. Dosiervorrichtung nach einem der vorhergehenden Ansprüche, dadurch gekennzeichnet, daß die Kraftmeßvorrichtung (8) eine weglos arbeitende Kraftmeßzelle ist.

13. Dosiervorrichtung nach einem der vorhergehenden Ansprüche, dadurch gekennzeichnet, daß der Abstreifer (10) und der Aufgabeschacht (3) - in Draufsicht gesehen - unmittelbar nebeneinander angeordnet sind.

14. Dosiervorrichtung nach einem der vorhergehenden Ansprüche, dadurch gekennzeichnet, daß die Schwenkachse (7) etwa auf Höhe der Umlaufebene des Meßtellers (9) angeordnet ist.

## Claims

1. A dosing device for the continuous gravimetric metering of pourable material being conveyable to a rotor rotated about a vertical axis of rotation (4) via a charging hopper (3) and being removable through a discharge portion being offset in the direction of rotation with respect to said charging hopper, wherein said rotor is pivotably supported on a substantially horizontal pivot shaft (7) and is connected to a force measuring device (8) located at a distance from said pivot,
characterized in that
the rotor (5) is formed as a disk-like, smooth measuring plate (9) and a stripper (10) overlapping the radius of said measuring plate (9) is located within said discharge portion (6).

2. The dosing device of claim 1, characterized in that said stripper (10) is formed to be arcuately curved.

3. The dosing device of claim 1 or 2, characterized in that said stripper (10) resiliently abuts said measuring plate (9).

4. The dosing device of any of claims 1 to 3, characterized in that said stripper (10) is secured to a cap (11) positioned on the axis of rotation (4) of said measuring plate (9) in a rotationally fixed manner.

5. The dosing device of any of claims 1 to 4, characterized in that said pivot shaft (7) extends through the center of said charging hopper (3) and/or said stripper (10).

6. The dosing device of any of claims 1 to 5, characterized in that said pivot shaft (7) is vertically adjustable.

7. The dosing device of any of claims 1 to 6, characterized in that said measuring plate (9) is fixed to a pivot frame (13) which, on the one hand, has one arm (14) thereof fixed to said pivot shaft (7) and, on the other hand, comprises a lever arm (15) for the coupling thereof to said force measuring device (8).

8. The dosing device of claim 7, characterized in that said lever arm (15) is vertically directed downward and is connected to said force measuring device (8) via a tie bar (16).

9. The dosing device of any of claims 1 to 8, characterized in that said pivot shaft (7) is formed at the top end of a base (17) composed of L-shaped side walls (18, 19) having cross girders (20, 21).

10. The dosing device of claim 9, characterized in that said force measuring device (8) is secured to a cross girder (21) of said base (17).

11. The dosing device of any of the preceding claims, characterized by a speed-controllable driving motor (23) for said measuring plate (9) and a tacho-alternator (24) for monitoring the rotational speed of said measuring plate (9).

12. The dosing device of any of the preceding claims, characterized in that said force measuring device (8) is a pathlessly operating force measuring cell.

13. The dosing device of any of the preceding claims, characterized in that said stripper (10) and said charging hopper (3) - seen in plan view - are arranged adjacently to each other.

14. The dosing device of any of the preceding claims, characterized in that said pivot shaft (7) is arranged at about the same level than the plane of rotation of said measuring plate (9).

## Revendications

1. Dispositif de dosage pour le dosage gravimétrique en continu de matériau en vrac qui peut être dirigé, par un puits d'alimentation (3), vers un rotor entraîné autour d'un axe de rotation vertical (4) et qui peut être évacué par une zone d'évacuation décalée par rapport au puits d'alimentation dans le sens de rotation, le rotor étant monté à pivotement autour d'un axe de pivotement sensiblement horizontal (7) et relié à un dispositif dynamométrique (8) disposé à distance de cet axe de pivotement, **caractérisé** en ce que le rotor (5) est conçu comme plateau de mesure (9) en forme de disque à surface lisse et un racleur (10), recouvrant le rayon du plateau de mesure (9), est disposé dans la zone d'évacuation (6).

2. Dispositif de dosage selon la revendication 1, **caractérisé** en ce que le racleur (10) est courbé en arc.

3. Dispositif de dosage selon la revendication 1 ou 2, **caractérisé** en ce que le racleur (10) s'applique élastiquement sur le plateau de mesure (9).

4. Dispositif de dosage selon l'une des revendications 1 à 3, **caractérisé** en ce que le racleur (10) est fixé à une calotte (11) disposée en rotation solidaire sur l'axe de rotation (4) du plateau de mesure (9).

5. Dispositif de dosage selon l'une des revendications 1 à 4, **caractérisé** en ce que l'axe de pivotement (7) passe par le milieu du puits d'alimentation (3) et/ou du racleur (10).

6. Dispositif de dosage selon l'une des revendications 1 à 5, **caractérisé** en ce que l'axe de pivotement (7) est réglable en hauteur.

7. Dispositif de dosage selon l'une des revendications 1 à 6, **caractérisé** en ce que le plateau de mesure (9) est monté sur un bâti pivotant (13) qui, d'une part, est monté par un bras (14) sur l'axe de pivotement (7) et, d'autre part, est pourvu d'un bras de levier (15) pour l'accouplement au dispositif dynamométrique (8).

8. Dispositif de dosage selon la revendication 7, **caractérisé** en ce que le bras de levier (15) est dirigé verticalement vers le bas et relié au dispositif dynamométrique (8) par un tirant (16).

9. Dispositif de dosage selon l'une des revendications 1 à 8, **caractérisé** en ce que l'axe de pivotement (7) est configuré à l'extrémité supérieure d'un socle (17) qui est formé par des joues latérales en L (18, 19) et des montants transversaux (20, 21).

10. Dispositif de dosage selon la revendication 9, **caractérisé** en ce que le dispositif dynamométrique (8) est fixé à un montant transversal (21) du socle (17).

11. Dispositif de dosage selon l'une des revendications précédentes, **caractérisé** par un moteur d'entraînement (23) à régime réglable pour le plateau de mesure (9) et une génératrice tachymétrique (24) pour surveiller la vitesse de rotation du plateau de mesure (9).

12. Dispositif de dosage selon l'une des revendications précédentes, **caractérisé** en ce que le dispositif dynamométrique (8) est une cellule dynamométrique travaillant sans course.

13. Dispositif de dosage selon l'une des revendications précédentes, **caractérisé** en ce que le racleur (10) et le puits d'alimentation (3) sont, en vue de dessus, directement voisins.

14. Dispositif de dosage selon l'une des revendications précédentes, **caractérisé** en ce que l'axe de pivotement (7) est disposé approximativement à hauteur du plan de rotation du plateau de mesure (9).
